# FASCICULE DE BREVET EUROPEEN

(11) **EP 1 609 677 B1**
(45) Date de publication et mention de la délivrance du brevet: **05.09.2007**
(21) Numéro de dépôt: 05291303.5
(22) Date de dépôt: 17.06.2005
(51) Int. Cl.: B60R 9/055, B60J 7/20, B60P 3/39

(54) **Pièce de carrosserie de toit de véhicule automobile**
Fahrzeugdachkarrosserieteil eines Kraftfahrzeuges
Vehicle body roof part of a vehicle

(30) Priorité: 18.06.2004 FR 0406677
(43) Date de publication de la demande: 28.12.2005
(73) Titulaire: COMPAGNIE PLASTIC OMNIUM, 69007 Lyon (FR)
(72) Inventeur: Bonneau, Eric, 38460 Saint Romain de Jalionas (FR); Delwal, Fabien, 01320 Chalamont (FR)
(74) Mandataire: Remy, Vincent Noel Paul

(56) Documents cités:
- EP-A- 1 424 265
- DE-A- 3 429 880
- DE-A- 3 603 452
- DE-A- 3 717 826
- DE-U- 9 207 442

## Description

La présente invention concerne une pièce de carrosserie de toit de véhicule automobile et un véhicule automobile comportant une telle pièce de carrosserie.

On connaît déjà, dans l'état de la technique, une pièce de carrosserie de toit véhicule automobile de type classique.

On connaît aussi un toit véhicule modulante avec un module contenant remplaçable. Ce toit est connu du document DE-A-3429880, ce document comprenant toutes les caractéristiques du préambule de la revendication 1.

Dans certains cas, la pièce de toit est munie d'une galerie pour le transport de bagages ou d'autres charges encombrantes.

Le principal inconvénient d'une telle galerie est que les bagages qui y sont fixés sont détachables, et donc qu'ils peuvent être sujets à des vols.

L'invention a notamment pour but de remédier à cet inconvénient en fournissant une pièce de carrosserie de toit de véhicule automobile étant conformée en un contenant délimitant un espace, ce contenant étant muni d'un ouvrant accessible depuis l'extérieur du véhicule, ce contenant étant déplaçable sur le véhicule, déplaçable entre une position fermée et une position ouverte dégageant un passage débouchant à l'intérieur du véhicule.

Grâce à l'invention, le contenant ne fait qu'un avec le reste du véhicule, augmentant ainsi la protection des bagages transportés contre le vol.

Par ailleurs, on notera que cette pièce de carrosserie de toit, conformée en contenant, s'intègre harmonieusement dans l'esthétique du véhicule, contrairement à un bagage rapporté sur une galerie de toit qui n'est en général pas adapté pour s'intégrer dans l'esthétique d'un véhicule en particulier.

Enfin, le contenant ne faisant qu'un avec la pièce de carrosserie de toit du véhicule automobile, il est monté en même temps que cette pièce de carrosserie de toit sur le reste du véhicule automobile, ce qui a pour effet de réduire la chaîne de montage.

De manière optionnelle, la pièce de carrosserie est déplaçable par translation par rapport au véhicule automobile entre les positions fermée et ouverte.

L'invention concerne en outre un véhicule automobile comportant une pièce de carrosserie selon l'invention.

L'invention sera mieux comprise à la lecture de la description qui va suivre, d'un mode de réalisation donné uniquement à titre d'exemple, en référence aux dessins annexés dans lesquels :
- la figure 1 est une vue en perspective de la partie haute d'un véhicule automobile comportant une pièce de carrosserie de toit selon un mode de réalisation de l'invention ;
- la figure 2 est une vue similaire à la figure 1 dans laquelle la pièce de carrosserie formant contenant est en position fermée.

On a représenté sur les figures un véhicule automobile désigné par la référence générale 10.

Le véhicule automobile 10 est muni d'une pièce 12 de carrosserie de toit, conformée en un contenant délimitant un espace.

Le contenant 12 est muni d'un ouvrant 14, accessible depuis l'extérieur du véhicule 10.

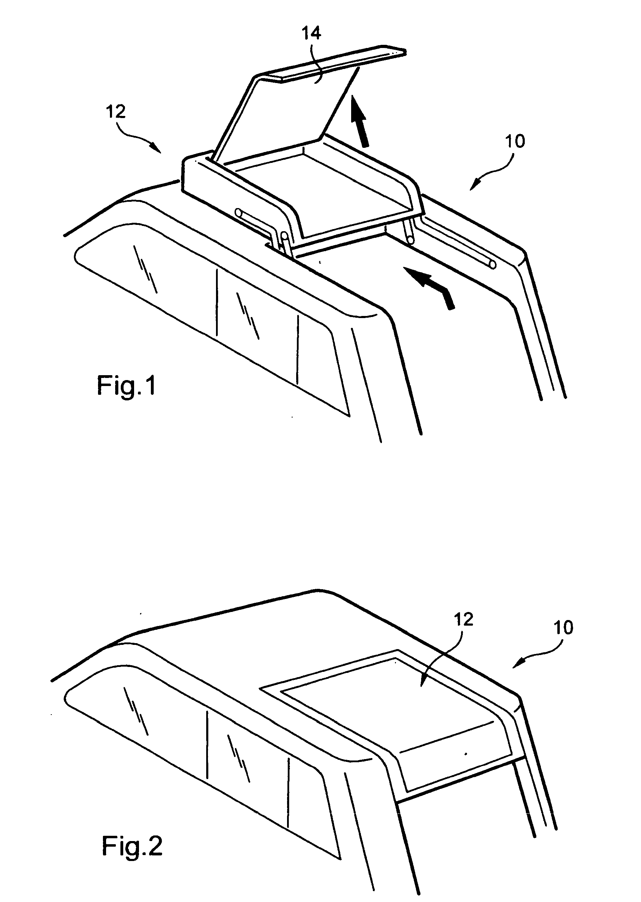

Dans l'exemple représenté, le contenant 12 est déplaçable par rapport au véhicule automobile 10, entre une position fermée représentée sur la figure 2 et une position ouverte représentée sur la figure 1, de manière à dégager un passage débouchant à l'intérieur du véhicule 10. Cela est particulièrement utile pour charger un véhicule dont l'ouvrant arrière peut laisser un espace libre vers le haut, comme par exemple un véhicule du type Pick-up.

A cet effet, le véhicule 10 et le contenant 12 sont généralement munis de moyens de guidage complémentaire du contenant 12. Par exemple, le véhicule 10 peut comporter des rails dans lesquels coulissent des éléments de coulissement ménagés sur le contenant 12.

De préférence, le contenant 12 est déplaçable par translation entre les positions fermée et ouverte.

Il est bien entendu que le mode de réalisation qui vient d'être décrit ne présente aucun caractère limitatif et qu'il pourra recevoir toute modification désirable sans sortir pour cela du cadre de l'invention.

## Revendications

1. Pièce (12) de carrosserie de toit de véhicule automobile (10) étant conformée en un contenant délimitant un espace, ce contenant (12) étant muni d'un ouvrant (14) accessible depuis l'extérieur du véhicule (10), **caractérisée en ce que** ce contenant (12) est déplaçable sur le véhicule entre une position fermée et une position ouverte dégageant un passage débouchant à l'intérieur du véhicule (10).

2. Pièce de carrosserie (12) suivant la revendication 1, déplaçable par translation par rapport au véhicule automobile (10) entre les positions fermée et ouverte.

3. Véhicule automobile (10) comportant une pièce de carrosserie (12) selon l'une quelconque des revendications 1 à 2.

## Claims

1. A bodywork part (12) for the roof of a motor vehicle (10), the part having the shape of a container defining a space, said container (12) being provided with an opening (14) accessible from outside the vehicle (10), the part being **characterized in that** the container (12) is movable on the vehicle between a closed position and an open position uncovering a passage leading to the inside of the vehicle (10).

2. A bodywork part (12) according to claim 1, movable in translation relative to the motor vehicle (10) between the closed and open positions.

3. A motor vehicle (10) including a bodywork part (12) according to claim 1 or claim 2.

## Patentansprüche

1. Karosserieteil (12) des Daches eines Kraftfahrzeugs (10), wobei das Karosserieteil als Behälter ausgebildet ist, der einen Raum begrenzt, wobei der Behälter (12) mit einer Klappe (14) ausgerüstet ist, die von außerhalb des Fahrzeugs (10) zugänglich ist, **dadurch gekennzeichnet, dass** dieser Behälter auf dem Fahrzeug zwischen einer geschlossenen Position und einer geöffneten Position, welche einen Durchgang zum Inneren des Fahrzeugs (10) freigibt, verschiebbar ist.

2. Karosserieteil (12) nach Anspruch 1, das in Bezug auf das Fahrzeug (10) zwischen der geschlossenen und der geöffneten Position translatorisch verschiebbar ist.

3. Kraftfahrzeug (10), das ein Karosserieteil (12) nach einem der Ansprüche 1 und 2 aufweist.
